# DEMANDE DE BREVET EUROPEEN

(11) **EP 1 862 873 A1**
(43) Date de publication de la demande: **05.12.2007**
(21) Numéro de dépôt: 06114946.4
(22) Date de dépôt: 02.06.2006
(51) Int. Cl.: G04G 9/00, G04C 17/00, G09F 13/24, G02B 26/00

(54) **Dispositif d'affichage pour un instrument portable, tel qu'une montre**

(71) Demandeur: Montres Rado S.A., 2543 Lengnau b. Biel (CH)
(72) Inventeur: Furetta, Alessandra, 2540, Grenchen (IT)
(74) Mandataire: Vigand, Philippe

(57) **Abrégé**

Le dispositif d'affichage (2) est destiné à équiper un instrument portable, tel qu'une montre (1). Le dispositif comprend au moins une première plaque transparente ou semi transparente (4, 6) fixée sur un élément inférieur (5). Plusieurs cavités fermées (29) sont formées au moins en partie dans la première plaque dans le champ de vision du dispositif pour l'affichage d'une information à travers la plaque. Chaque cavité (29) est reliée par un canal correspondant (28, 25) à travers l'élément inférieur (5) à un réservoir (24) de fluide coloré par l'intermédiaire de moyens d'alimentation (23, 27) permettant de remplir ou vider chaque cavité fermée du fluide coloré pour l'affichage d'une information. Les moyens d'alimentation comprennent au moins une micropompe reliée par un conduit d'entrée (26) au réservoir de fluide coloré, et des microvalves (27) reliées à la micropompe par un conduit de sortie commun (25). Chaque cavité (29) est reliée directement par son canal respectif à une microvalve correspondante. La micropompe et les microvalves sont commandées par des signaux électriques de moyens de commande, qui peuvent être cadencés par une base de temps afin de commander l'affichage d'une information temporelle sur le dispositif d'affichage à l'aide du fluide coloré.

## Description

La présente invention concerne un dispositif d'affichage pour un instrument portable, tel qu'une montre. Le dispositif d'affichage comprend au moins une première plaque transparente ou semi transparente disposée sur un élément inférieur, une cavité fermée étant formée au moins en partie dans la première plaque dans le champ de vision du dispositif pour l'affichage d'une information à travers la plaque.

La présente invention concerne également une montre qui comprend un tel dispositif d'affichage.

Habituellement, un dispositif d'affichage d'une information d'un instrument portable est constitué par une cellule à cristaux liquides. La cellule d'affichage comprend un substrat avant transparent ayant des premières électrodes transparentes sur une face intérieure, un substrat arrière transparent ayant au moins une seconde électrode transparente sur une face intérieure et un cadre de scellement des deux substrats pour définir un espace fermé entre les substrats. Une substance occupe l'espace fermé entre les premières et secondes électrodes. Les propriétés optiques ou physiques de la substance peuvent être modifiées entre les électrodes activées par une différence de potentiels appliqués par des moyens de commande. Par l'action des moyens de commande, la cellule d'affichage, qui dispose également de polariseurs, permet d'afficher une information, par exemple une heure ou une date.

Les électrodes de telles cellules à cristaux liquides doivent être alimentées électriquement en continu de manière à maintenir ou modifier l'affichage d'une information, ce qui peut constituer un inconvénient dans le cas où l'instrument portable est alimenté par une batterie ou un accumulateur de petite taille. De plus, la cellule à cristaux liquides ne permet pas de maintenir une information affichée en cas de changement de batterie.

La présente invention a pour but principal de fournir un dispositif d'affichage pour un instrument portable, tel qu'une montre, d'un nouveau genre afin de pallier les inconvénients des dispositifs de l'art antérieur décrits ci-devant.

A cet effet, la présente invention a pour objet un dispositif d'affichage cité ci-devant qui comprend les caractéristiques définies dans la revendication 1.

Des formes particulières avantageuses du dispositif d'affichage sont définies dans les revendications dépendantes 2 à 11.

Un avantage du dispositif d'affichage selon l'invention réside dans le fait qu'une cavité fermée est formée en partie dans une plaque transparente ou semi transparente disposée sur un élément inférieur afin d'être remplie ou vidée d'un fluide coloré par l'intermédiaire de moyens d'alimentation en fluide coloré pour l'affichage d'une information. Pour l'affichage d'une information du type à contraste négatif, le fluide coloré est retiré de la cavité si la couleur du dispositif d'affichage autour de la cavité est identique à la couleur du fluide coloré. Dans le cas contraire d'un affichage d'une information du type à contraste positif, la cavité fermée est remplie du fluide coloré.

De préférence, plusieurs cavités fermées sont formées au moins en partie dans la première plaque transparente ou semi transparente. Un canal par cavité est relié à travers l'élément inférieur par l'intermédiaire des moyens d'alimentation en fluide coloré à un réservoir de fluide coloré. Ces moyens d'alimentation comprennent par exemple au moins une micropompe reliée par un conduit d'entrée directement au réservoir de fluide coloré, et par un conduit de sortie commun à une microvalve par cavité directement reliée au canal respectif de la cavité correspondante.

Avantageusement, la micropompe et les microvalves sont commandées par des signaux électriques de moyens de commande pour remplir ou vider certaines cavités du fluide coloré. Dans le cas d'une montre, les moyens de commande sont cadencés par une base de temps d'un mouvement d'horlogerie électronique pour commander l'affichage d'une heure ou d'une date. Pour ce faire, les cavités sont configurées en digits formés chacun de 7 segments d'affichage.

Avantageusement, la première plaque est composée d'une plaque supérieure en verre ou en plastique transparente fixée sur une plaque intermédiaire en verre ou en plastique, qui peut être teintée en partie. Les cavités fermées sont formées en partie dans la plaque intermédiaire. Plusieurs pierres transparentes ou semi transparentes, telles que des pierres précieuses ou synthétiques, peuvent être intégrées dans la matière de la plaque intermédiaire. Ces pierres sont agencées également en digits directement en regard des digits formés par les cavités. En l'absence de fluide coloré dans les cavités, les pierres permettent de combiner l'information du dispositif avec la réfraction de lumière au travers des pierres et/ou la réflexion de lumière sur ou dans les pierres pour améliorer la qualité de l'affichage.

Les pierres précieuses peuvent être des rubis, des saphirs, des émeraudes, des pierres de lune, des diamants, ou d'autres pierres précieuses. Ces pierres peuvent être également des pierres synthétiques, telles que des pierres en oxyde de zirconium cubique monocristallin. De ce fait, plusieurs sortes de pierres de taille égale ou différente peuvent garnir le support afin de donner des couleurs différentes à travers l'information du dispositif et une diffraction ou reflet de la lumière particulier.

Avantageusement, un dispositif de rétro-éclairage peut être prévu pour illuminer certaines pierres transparentes ou semi transparentes visibles par transparence de certaines cavités non remplies du fluide coloré dans le champ de vision du dispositif d'affichage. La taille des pierres peut être optimisée pour laisser passer un maximum de lumière. Cette taille peut être d'un type brillant ou baguette ou d'autres types à plusieurs facettes.

Dans le cas où un support de pierres transparentes ou semi transparentes est fixé sur la plaque intermédiaire pour un affichage de préférence à contraste positif, certaines cavités sélectionnées sont remplies du fluide coloré, par exemple de couleur noire. Les parties autour de l'information affichée peuvent apparaître de couleur claire, par exemple blanche ou argentée afin de bien contraster avec l'information lue à travers les pierres du support à la lumière du jour ou avec l'aide du dispositif de rétro-éclairage.

A cet effet, la présente invention a pour objet également une montre qui comprend un dispositif d'affichage comme mentionné dans la revendication 12.

Des formes particulières avantageuses de la montre sont définies dans les revendications dépendantes 13 et 14.

Les buts, avantages et caractéristiques du dispositif d'affichage et de la montre le comprenant apparaîtront mieux dans la description suivante de formes d'exécution de l'invention non limitatives en liaison avec les dessins dans lesquels :
Les figures 1a à 1f représentent schématiquement différentes étapes d'affichage à l'aide du fluide coloré du dispositif d'affichage selon l'invention combiné avec une plaque ou un support transparent ou semi transparent à pierres précieuses,
les figures 2 et 3 représentent une vue en coupe diamétrale et une vue de dessus d'une première forme d'exécution d'un dispositif d'affichage selon l'invention équipant une montre à affichage numérique de l'heure,
les figures 4 et 5 représentent une vue en coupe diamétrale et une vue de dessus d'une seconde forme d'exécution d'un dispositif d'affichage selon l'invention comprenant une plaque intermédiaire ou un support transparent ou semi transparent à pierres précieuses équipant une montre à affichage de l'heure par des aiguilles, et
les figures 6 et 7 représentent une vue en coupe diamétrale et une vue de dessus d'une troisième forme d'exécution d'un dispositif d'affichage selon l'invention muni d'un support transparent ou semi transparent à pierres précieuses équipant une montre à affichage numérique de l'heure.

Dans la description suivante, il n'est fait référence qu'à un dispositif d'affichage équipant une montre, par exemple une montre-bracelet en tant qu'instrument portable. Toutes les parties conventionnelles du dispositif d'affichage, qui font partie des connaissances générales de l'homme du métier ne seront expliquées que sommairement dans la description suivante. Cependant, il est bien clair qu'un tel dispositif d'affichage peut équiper d'autres instruments portables, tels que des téléphones portables, des organiseurs électroniques ou d'autres instruments.

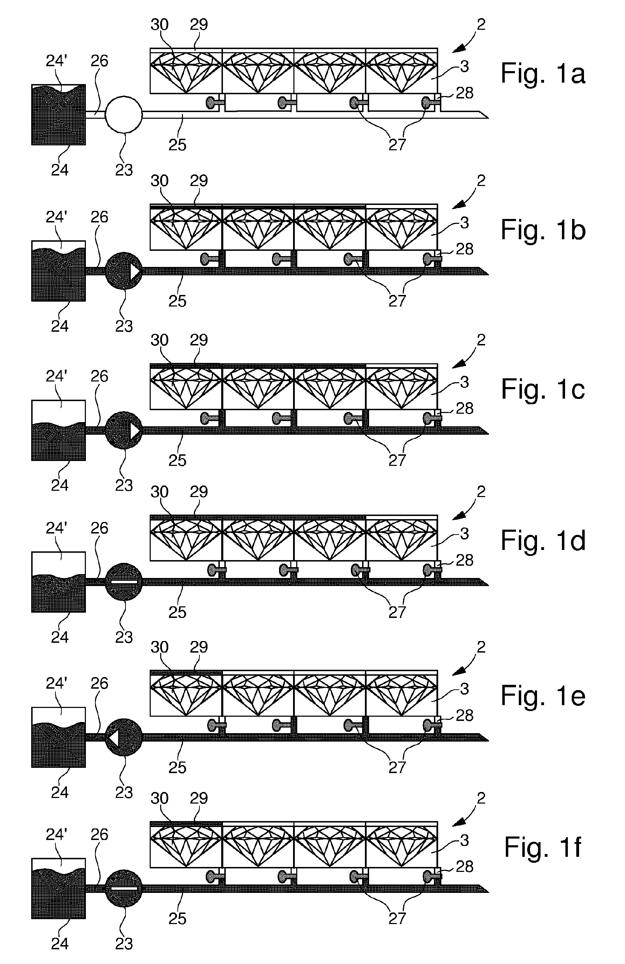

Les figures 1a à 1f illustrent plusieurs vues schématiques de différentes étapes d'affichage d'une partie d'un dispositif d'affichage 2 selon l'invention utilisant un fluide coloré 24', par exemple de couleur noire, pour l'affichage d'une information, par exemple d'une information horaire. Le fluide coloré est choisi de manière à offrir un contraste suffisant pour l'affichage d'une information par rapport à la teinte ou couleur générale du dispositif d'affichage dans le champ de vision du côté de la plaque supérieure du dispositif d'affichage. Des moyens d'alimentation en fluide coloré sont prévus pour véhiculer le fluide coloré dans une position d'affichage d'une information.

De manière générale, le dispositif d'affichage 2 est composé d'au moins une micropompe 23 qui est reliée par un conduit d'entrée 26 à un réservoir 24 de fluide coloré 24', d'un certain nombre de valves ou microvalves 27 reliées à la micropompe 23 par un conduit de sortie commun 25, et de plusieurs cavités ou cellules 29 réalisées au moins en partie dans une première plaque solide transparente ou partiellement transparente. La micropompe et les microvalves font partie des moyens d'alimentation en fluide coloré. Les cavités fermées sont reliées chacune par un canal correspondant 28 à une microvalve respective 27. Le dispositif d'affichage 2 peut également comprendre une plaque intermédiaire ou un support transparent ou semi transparent dans lequel sont placées des pierres transparentes ou semi transparentes. Ces pierres peuvent être des pierres précieuses 30, telles que des diamants taillés, ou des pierres synthétiques, telles que des pierres en oxyde de zirconium cubique monocristallin.

Dans la configuration simplifiée présentée aux figures 1a à 1f, la structure 3 à pierres précieuses 30 est disposée juste en dessous de chaque cavité 29 susceptible de recevoir le fluide coloré 24'. De plus par mesure de simplification, chaque canal 28 n'est représenté que par un trait entre chaque pierre pour relier à travers la structure 3 chaque microvalve à la cavité correspondante 29. Il est à noter également qu'une ou plusieurs pierres peuvent être placées dans chaque cavité plutôt que sur un support particulier afin d'être enrobées par le fluide coloré lorsque la cavité correspondante est remplie dudit fluide.

La micropompe 23 et les microvalves 27 sont commandées par des moyens de commande non représentés. De préférence, des signaux électriques sont fournis par les moyens de commande afin d'activer la micropompe 23, par exemple du type bidirectionnel, et commander chaque microvalve 27. De préférence, chaque microvalve reste fermée à l'état de repos, c'est-à-dire sans réception de signaux électriques de la part des moyens de commande par économie d'énergie électrique.

A la figure 1a, le dispositif d'affichage 2 est dans une position de repos dans laquelle toutes les microvalves et la micropompe ne sont pas activées par des signaux électriques. Le fluide coloré 24' reste donc dans le réservoir 24 de stockage. Comme chaque cavité 29 n'est pas remplie par le fluide coloré, les pierres précieuses 30 de la structure 3 sont donc visibles dans le champ de vision du dispositif d'affichage afin de réfléchir ou réfracter la lumière du jour à travers lesdites pierres. Dans cet état si la couleur du dispositif d'affichage autour des cavités 29 est sensiblement la même que la couleur vue à travers l'ensemble des cavités non remplies du fluide coloré, aucune information n'est présentée aux yeux d'un utilisateur du dispositif d'affichage.

Aux figures 1 b et 1 c, la micropompe 23 est activée pour véhiculer du fluide coloré 24' provenant du réservoir 24 par le conduit d'entrée 26 à travers le conduit de sortie 25. Comme montré sous forme d'exemple non limitatif, les trois premières microvalves 27 vues depuis la gauche sont commandées pour être ouvertes, alors que la quatrième microvalve reste fermée. Le fluide coloré 24' est donc poussé à travers chaque canal 28 reliant les microvalves 27 ouvertes. Les trois premières cavités ou cellules 29 sont progressivement remplies du fluide coloré 24' transmis par l'activation de la micropompe. Dans l'état de la figure 1c, les pierres précieuses 30 se trouvant en dessous des cavités remplies du fluide coloré ne sont plus visibles dans le champ de vision du dispositif d'affichage. Une information peut ainsi être affichée sur le dispositif d'affichage du type à contraste positif grâce au fluide coloré ayant rempli certaines cavités. Pour un dispositif à contraste négatif, l'information est affichée par des cavités vidées du fluide coloré.

Une fois que les cavités sélectionnées 29 ont été remplies par le fluide coloré, la micropompe 23 et toutes les microvalves 27 ne sont plus activées par les moyens de commande. Ceci a pour conséquence que toutes les microvalves sont fermées tout en maintenant le fluide coloré dans les cavités sélectionnées 29 en fonction de l'information à présenter.

Lors d'un changement d'une information présentée sur le dispositif d'affichage 2, la micropompe 23 peut être activée par les moyens de commande en sens inverse, c'est-à-dire pour aspirer le fluide coloré 24' de certaines cavités 29 pour le stocker dans le réservoir 24. Comme montré sous forme d'exemple non limitatif à la figure 1e, uniquement les deuxième et troisième microvalves 27 sont activées par les moyens de commande pour être ouvertes. De ce fait, le fluide coloré 24' des deuxième et troisième cavités est aspiré par la micropompe 23. Ainsi, uniquement la première pierre précieuse 30 n'est pas visible dans le champ de vision du dispositif d'affichage.

Finalement à la figure 1f, une fois que le fluide coloré 24' a été aspiré des cavités ou cellules sélectionnées 29, la micropompe 23 et toutes les microvalves 27 ne sont plus activées. Ainsi comme pour la figure 1d, les microvalves sont fermées. On comprend donc qu'à la différence d'un dispositif d'affichage à cristaux liquides, il n'est pas nécessaire d'alimenter continuellement en électricité le dispositif d'affichage pour présenter une information déterminée. De ce fait, comme le dispositif d'affichage 2 équipe un instrument portable, tel qu'une montre-bracelet alimentée par une batterie ou un accumulateur de petite taille, une réduction de consommation électrique peut ainsi être constatée par rapport aux dispositifs d'affichage de l'art antérieur.

Il peut être envisagé d'utiliser une première micropompe pour véhiculer le fluide coloré du réservoir vers les cavités sélectionnées, et une seconde micropompe pour aspirer le fluide coloré de certaines cavités remplies dudit fluide. Il peut être prévu également des moyens pour permettre à de l'air de sortir ou entrer dans chaque cavité, quand ladite cavité est remplie ou vidée du fluide coloré. De plus, en lieu et place des microvalves, il peut être envisagé de relier chaque canal 28 à une micropompe spécifique dont le conduit d'entrée de chaque micropompe est relié directement et de manière commune au réservoir 24 de fluide coloré 24'.

Une micropompe 23 peut être réalisée selon un principe équivalent à celui de la micropompe décrite notamment dans le brevet CH 679 555, qui explicite le fonctionnement d'une telle micropompe. Généralement, une telle micropompe est constituée d'une chambre de pompage, d'un canal d'entrée et d'un canal de sortie. Le canal d'entrée communique avec la chambre de pompage par l'intermédiaire d'un premier clapet d'aspiration, alors que le canal de sortie communique avec la chambre de pompage par l'intermédiaire d'un second clapet dit de refoulement. Tous ces éléments sont réalisés traditionnellement par gravure d'une plaquette de silicium, qui est enfermée par la suite entre deux plaquettes de verre. A travers au moins une des plaquettes en verre, les canaux d'entrée et de sortie de la micropompe sont réalisés.
Grâce à l'opération de gravure de la plaquette en silicium, une partie suffisamment amincie de la plaquette constitue une membrane susceptible de bouger en fonction d'une différence de pression notamment dans la chambre de pompage. Pour l'activation de la micropompe, il est utilisé de préférence une pastille piézo-électrique positionnée sur une paroi déformable d'une des plaquettes en verre en regard de la chambre de pompage.

D'autres types de micropompe peuvent être utilisés pour remplir la même fonction pour le dispositif d'affichage selon l'invention. Pour ce faire, le lecteur peut se référer à certains autres types de micropompes, comme décrit sous les sites "www.ahd.tudelft.ni/~peterv/presentations/micropumps.pdf" ou "www.pro-4-pro.com/en/Micro/Company-4400149/42b6c62ca6815.html".

L'ensemble des microvalves 27 du dispositif d'affichage 2 peut être réalisé également sur la base d'une gravure d'une plaquette de silicium fixée sur une plaquette en verre selon un principe équivalent à celui décrit dans la demande de brevet EP 0 310 605. Chaque clapet de fermeture par microvalve est réalisé pour obstruer le passage par contact direct sur la plaquette de verre entre un canal d'entrée et un canal de sortie 28 de la microvalve en position de repos. Une couche piézo-électrique par microvalve peut être placée soit sur la plaquette en silicium soit sur une portion déformable de la plaquette en verre en face du clapet de fermeture. Lorsque la couche piézo-électrique de la microvalve correspondante est activée par des signaux électriques, la microvalve est ouverte. La ou les micropompes peuvent aussi être réalisées avec les microvalves dans un même ensemble de plaquettes pour former un seul composant.

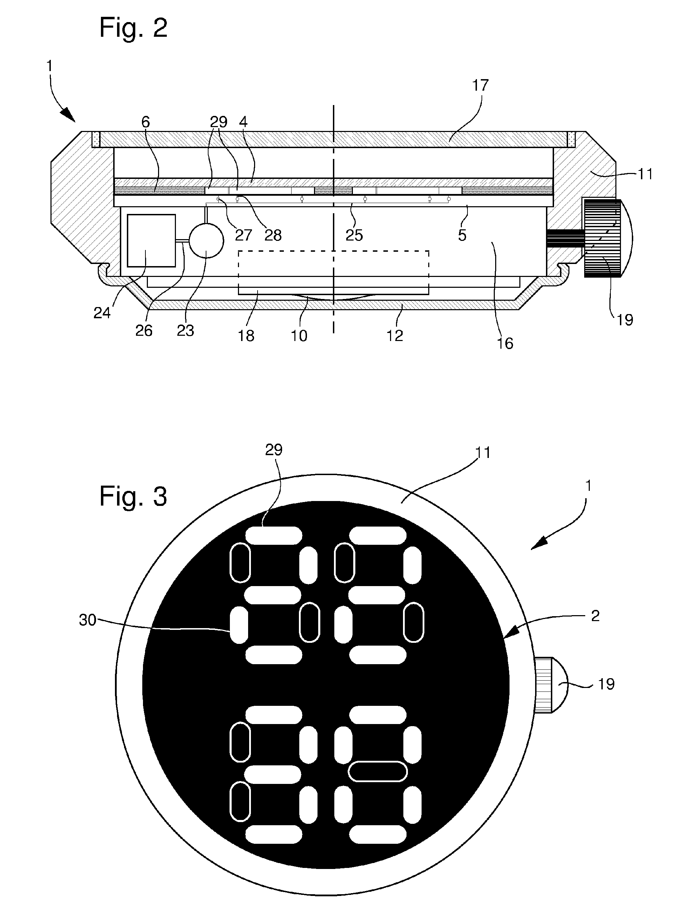

En référence aux figures 2 et 3, on observe une première forme d'exécution d'un dispositif d'affichage 2 selon l'invention dans une montre 1. Une plaque supérieure du dispositif d'affichage définit une partie supérieure d'un cadran de montre. Cette montre 1 comprend classiquement une boîte 11 munie d'un fond 12 dans laquelle sont disposés un mouvement d'horlogerie électronique 16 avec un circuit garde-temps électronique associé et une pile 18 qui prend appui sur le fond 12 par l'intermédiaire d'un ressort de contact 10. La boîte 11 est également fermée de façon classique par une glace 17 recouvrant la totalité du cadran, et un bouton couronne ou bouton poussoir 19 de la boîte permet de régler notamment l'heure de la montre ou la date.

Dans cette forme d'exécution, l'affichage de l'heure ou de la date est présenté sous forme numérique. Chaque cavité 29 susceptible d'être remplie par le fluide coloré représente un des sept segments d'un des quatre digits représentant les chiffres de l'heure ou de la date à afficher sur le dispositif d'affichage 2. Chaque cavité 29 est réalisée classiquement par une gravure traversante ou usinage de certaines parties d'une plaque intermédiaire 6, par exemple en verre ou en plastique, qui est enfermée par la suite entre un élément inférieur sous forme d'une plaque inférieure 5 et une plaque supérieure 4 préférentiellement en verre constituant le cadran de la montre. Bien entendu, la plaque supérieure 4 et la plaque intermédiaire gravée 6 peuvent être formée d'une seule plaque dans laquelle des portions de cavités 29 sont gravées ou usinées classiquement avant de fixer cette plaque sur l'élément inférieur pour fermer les cavités.

Chaque cavité n'est donc reliée que par un canal correspondant 28 d'alimentation en fluide coloré réalisé dans l'élément inférieur 5. Chaque canal 28 est relié à une sortie d'une microvalve spécifique 27, qui est commandée par des signaux électriques fournis par des moyens de commande non représentés, mais cadencés par une base de temps du circuit garde-temps du mouvement d'horlogerie 16. Un conduit de sortie commun 25 relie chaque entrée des microvalves afin d'être relié à une sortie de la micropompe 23, dont l'entrée est reliée par un conduit d'entrée 26 à un réservoir 24 de fluide coloré. La micropompe 23 est également commandée par des signaux électriques fournis par les moyens de commande cadencés par la base de temps. Tous les composants décrits ci-devant, qui sont illustrés de manière symbolique à la figure 2, peuvent être réalisés dans un même élément ou substrat inférieur excepté le réservoir 24 de fluide coloré.

L'épaisseur de la plaque intermédiaire peut être comprise entre 100 et 300 µm, par exemple de l'ordre de 150 µm, ce qui définit la hauteur de chaque cavité. La largeur de chaque canal d'alimentation 28 peut être comprise entre 10 et 50 µm, par exemple de l'ordre de 30 µm de manière à laisser passer un fluide coloré peu visqueux. L'élément inférieur 5 peut être réalisé avec une épaisseur comprise entre 0.5 à 1.5 mm.

Comme représenté aux figures 2 et 3, la plaque intermédiaire 6 autour des cavités est teintée de la même couleur, par exemple noire, que le fluide coloré pour un affichage à contraste négatif, alors que la plaque supérieure en verre ou en plastique 4 est entièrement transparente. Pour que le dispositif d'affichage dans ce cas ne présente aucune information, chaque cavité 29 doit être remplie par le fluide coloré. Pour visionner une information de l'heure ou de la date, un certain nombre de cavités sont vidées du fluide coloré. De cette façon, chaque segment des digits des chiffres à afficher apparaît dans le champ de vision du dispositif d'affichage d'une autre couleur, par exemple de la couleur de l'élément inférieur 5 en blanc ou de couleur argentée.

Bien entendu, il peut être envisagé d'utiliser un affichage d'une information à contraste positif sur le dispositif d'affichage 2 non représenté à la figure 3. Dans ce cas, la plaque intermédiaire 6, ainsi que la plaque supérieure 4 sont de préférence transparentes, alors que la surface supérieure de l'élément inférieur 5 présente une couleur blanche ou argentée dans le champ de vision du dispositif d'affichage 2. Chaque cavité est vidée du fluide coloré à l'état de repos sans affichage d'une information par le dispositif d'affichage. Pour l'affichage d'une information, certaines cavités 29 peuvent être par contre remplies dudit fluide coloré en commandant la micropompe et les microvalves respectives à l'aide des signaux électriques fournis par les moyens de commande.

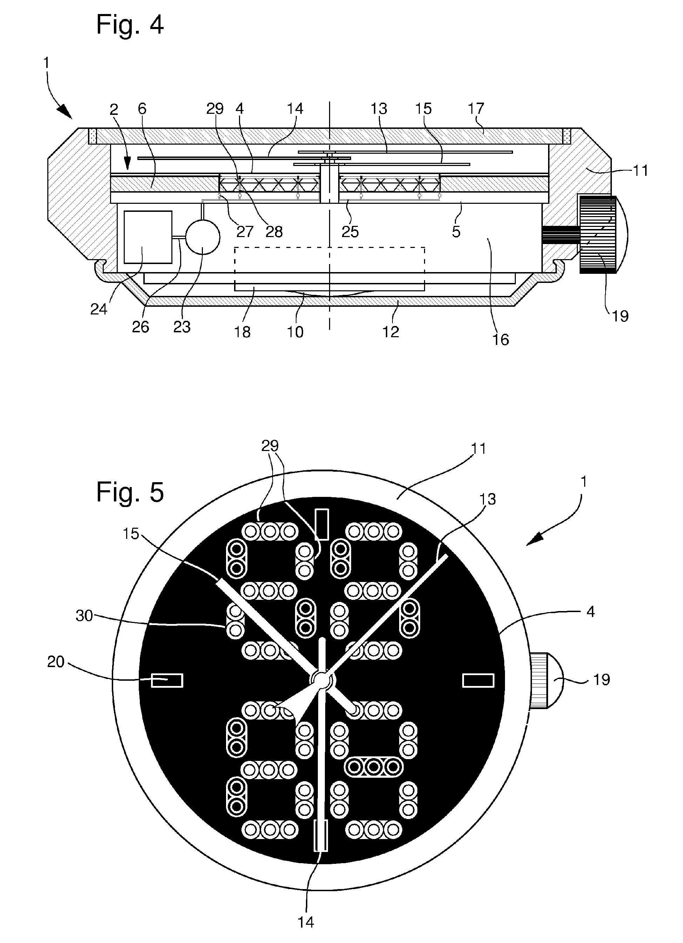

En référence aux figures 4 et 5, on observe une seconde forme d'exécution d'un dispositif d'affichage 2 selon l'invention équipant une montre 1. Comme précédemment, une plaque supérieure transparente 4, par exemple en verre, du dispositif d'affichage 2 définit une partie supérieure d'un cadran de montre. Il est à noter que tous les composants de la montre 1, qui comprend le dispositif d'affichage 2 selon l'invention décrits ci-après portent des signes de référence identiques à ceux présentés aux figures 2 et 3. Par simplification, il ne sera ainsi pas répété la description de chacun de ces composants pour les figures 4 et 5.

La montre dans cette seconde forme d'exécution est susceptible de fournir une indication horaire à l'aide d'une aiguille des secondes 13, d'une aiguille des minutes 14 et d'une aiguille des heures 15. Ces aiguilles sont entraînées par un dispositif d'entraînement (non représenté). Ces aiguilles se déplacent au-dessus d'un cadran constitué en partie par la plaque supérieure 4 du dispositif d'affichage 2, qui porte des heures index 20 visibles sur la figure 5. Pour ce faire, l'axe des aiguilles passe à travers une ouverture 9 pratiquée au centre du dispositif d'affichage 2 afin d'être entraînée par le dispositif d'entraînement du mouvement d'horlogerie 16.

La plaque intermédiaire 6 de préférence en plastique transparent ou semi transparent du dispositif d'affichage 2 comprend plusieurs pierres transparentes ou semi transparentes 30 maintenues dans la matière de la plaque. Ces pierres, qui sont de préférence des pierres précieuses, sont disposées sous chaque segment des digits constitués par les cavités 29. La dimension des segments et des pierres précieuses est choisie de manière à voir au moins une pierre précieuse, de préférence au moins deux pierres précieuses, par segment transparent, c'est-à-dire quand la cavité correspondante est vidée du fluide coloré. Dans ce cas de figure, il est possible d'observer entièrement 2 ou 3 pierres précieuses ou plus à travers certains segments transparents comme montré par l'indication horaire 22h30 de la figure 5.

La largeur adéquate de chaque pierre précieuse peut être choisie inférieure à 1 mm, par exemple de l'ordre de 0.8 mm (0.01 carat) en fonction de la largeur choisie d'un segment de digit. L'espace séparant chaque pierre précieuse est inférieur à la largeur des pierres, notamment inférieur à 0.5 mm, par exemple 0.15 mm. Bien entendu, il est envisageable de munir la plaque intermédiaire 6 de pierres précieuses de taille supérieure à 1 mm, par exemple de l'ordre de 1.5 mm ou supérieure.

Plusieurs sortes de pierres de couleur différente peuvent être intégrées dans la plaque intermédiaire 6. Les pierres précieuses 30 peuvent être des rubis, des saphirs, des émeraudes, des pierres de lune, des diamants, ou d'autres pierres précieuses. Chaque pierre peut être taillée en deux parties sensiblement tronconiques depuis une zone intermédiaire la plus large, ou posséder plusieurs facettes taillées. La dimension des pierres disposées dans la plaque intermédiaire peut être différente. Des pierres de couleur ou de taille différentes peuvent être sélectionnées pour chaque digit de l'information à afficher par le dispositif d'affichage 2. La taille des pierres peut être choisie parmi des types, tels que brillant, baguette ou autres types à multiples facettes pour donner un éclat lumineux aux pierres visibles.

Les cavités 29 constituant chaque segment des digits sont gravées dans la plaque intermédiaire en plastique jusqu'à fleur de la facette supérieure de chaque pierre précieuse 30. Une plaque supérieure 4 transparente en verre ou également en plastique est fixée sur la plaque intermédiaire gravée ou usinée afin de fermer chaque cavité. Chaque canal 28 d'alimentation en fluide coloré est réalisé à travers la plaque intermédiaire pour relier chaque cavité 29 à une microvalve 27 respective. Dans le cas d'un affichage à contraste négatif comme représenté à la figure 5, la plaque intermédiaire 6 peut être teintée d'une couleur, par exemple noire, identique au fluide coloré tout autour des cavités 29.

Il peut être envisageable qu'une ou plusieurs pierres soient disposées à l'intérieur de chaque cavité 29, plutôt que d'être intégrées dans la matière de la plaque intermédiaire 6. Dans ce cas, le fluide coloré enrobe chaque pierre précieuse dans le cas où la cavité est remplie par ledit fluide.

Grâce aux pierres précieuses 30 disposées sous les cavités par rapport au champ de vision du dispositif d'affichage, une amélioration de la vision de l'information affichée est obtenue par réflexion ou réfraction de la lumière du jour à travers lesdites pierres visibles. Pour ce faire, l'indice de réfraction de la matière de la plaque intermédiaire doit être différent de celui des pierres précieuses. Des effets de couleurs peuvent également apparaître par diffraction de la lumière du jour à travers les pierres précieuses visibles, ce qui peut améliorer la vision de l'information tout en apportant un effet esthétique à la montre.

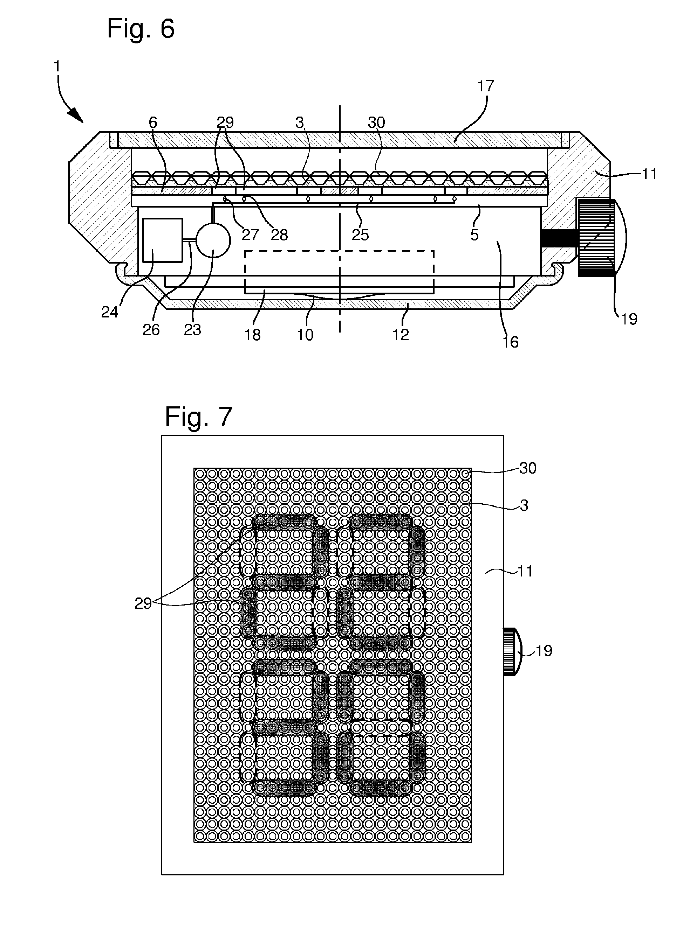

En référence aux figures 6 et 7, une troisième forme d'exécution d'un dispositif d'affichage 2 selon l'invention équipant une montre 1 à affichage numérique de l'heure est représentée. La boîte 11 de montre est de forme rectangulaire en vue de dessus. Il est à noter que tous les composants de la montre 1, qui comprend le dispositif d'affichage 2 selon l'invention décrits ci-après portent des signes de référence identiques à ceux présentés aux figures 2 à 5. Par simplification, il ne sera ainsi pas répété la description de chacun de ces composants pour les figures 6 et 7.

La différence essentielle de cette troisième forme d'exécution par rapport à la première forme d'exécution est qu'en lieu et place de la plaque supérieure pour fermer chaque cavité 29 obtenue par gravure ou usinage de la plaque intermédiaire 6, il est utilisé un support 3 de pierres précieuses. Ce support transparent ou semi transparent 3 forme une grille maintenant plusieurs pierres précieuses transparentes ou semi transparentes 30 de couleur identique ou différente. Dans ce cas de figure, les pierres précieuses rapprochées l'une de l'autre peuvent couvrir l'intégralité de la portion du support directement visible dans le champ de vision du dispositif d'affichage 2.

La plaque intermédiaire est de préférence transparente de manière à permettre un affichage de l'information par contraste positif en remplissant les cavités sélectionnées par le fluide coloré. Il peut être prévu également dans cette forme d'exécution, un dispositif de rétro-éclairage constitué de préférence d'une feuille électroluminescente placée sur la surface supérieure de l'élément inférieur 5 en forme de plaque. Ce dispositif de rétro-éclairage permet dans l'obscurité de visionner les informations du dispositif d'affichage tout en traversant les pierres précieuses 30 visibles du support 3.

Il peut être envisagé également d'utiliser un dispositif d'éclairage frontal placé au-dessus de la plaque supérieure et/ou du support 3 de pierres précieuses transparentes ou semi transparentes 30. Ce dispositif d'éclairage frontal peut être composé par exemple d'une diode électroluminescente classique (LED) ou organique (OLED) disposée à proximité de la boîte 11 de montre.

A partir de la description qui vient d'être faite de multiples variantes de réalisation du dispositif d'affichage peuvent être conçues par l'homme du métier sans sortir du cadre de l'invention définie par les revendications. Les plaques, constituant la partie principale du dispositif d'affichage, peuvent être courbées sous la forme d'une portion de cylindre afin d'équiper une montre dont le boîtier est également courbé. L'information affichée par l'ensemble d'affichage peut être du type alphanumérique, voire une image ou un motif. Le réservoir de fluide coloré peut être relié par un passage isolé à travers la boîte de la montre pour permettre de le remplir de fluide coloré ou de changer de type de fluide coloré, par exemple d'une couleur différente. Il peut être prévu deux réservoirs pour deux fluides colorés d'une couleur différente, deux micropompes reliées chacune à un réservoir respectif, pour permettre de remplir chaque cavité par l'un ou l'autre des fluides colorés par un premier canal relié à une micropompe ou par un second canal relié à l'autre micropompe. Il peut être prévu un composant comprenant deux micropompes à fonctionnement inverse, de manière à définir un composant à micropompe de type bidirectionnel.

## Revendications

1. Dispositif d'affichage (2) pour un instrument portable, tel qu'une montre (1), le dispositif comprenant au moins une première plaque transparente ou semi transparente (3, 4, 6) disposée sur un élément inférieur (5), une cavité fermée (29) étant formée au moins en partie dans la première plaque dans le champ de vision du dispositif pour l'affichage d'une information à travers la plaque, **caractérisé en ce que** la cavité (29) est reliée par un canal (28, 25) à travers l'élément inférieur (5) à un réservoir (24) de fluide coloré (24') par l'intermédiaire de moyens d'alimentation (23, 27) permettant de remplir ou vider la cavité fermée du fluide coloré pour l'affichage d'une information.

2. Dispositif d'affichage (2) selon la revendication 1, **caractérisé en ce que** les moyens d'alimentation en fluide coloré comprennent au moins une micropompe (23) reliée au réservoir à fluide coloré.

3. Dispositif d'affichage (2) selon la revendication 1, **caractérisé en ce que** plusieurs cavités fermées (29) sont formées en partie dans la première plaque pour être reliées chacune par un canal respectif à travers l'élément inférieur opaque au réservoir de fluide coloré par l'intermédiaire des moyens d'alimentation en fluide coloré, qui sont configurés et commandés de manière à remplir ou vider au moins certaines cavités fermées sélectionnées du fluide coloré pour l'affichage d'une information.

4. Dispositif d'affichage (2) selon la revendication 3, **caractérisé en ce que** les moyens d'alimentation en fluide coloré comprennent pour l'alimentation en fluide coloré de chaque cavité une microvalve (27) directement reliée au canal respectif de la cavité fermée (29) à remplir ou vider du fluide coloré, chaque microvalve étant reliée par un conduit de sortie commun (25) à une micropompe, qui est reliée directement par un conduit d'entrée (26) au réservoir (24) de fluide coloré (24').

5. Dispositif d'affichage (2) selon la revendication 4, **caractérisé en ce que** la micropompe (23) et les microvalves (27) sont commandées par des signaux électriques fournis par des moyens de commande, les microvalves étant fermées dans une position de repos sans signaux de commande fournis par les moyens de commande.

6. Dispositif d'affichage (2) selon la revendication 5, pour une montre (1) en tant qu'instrument portable, la montre comprenant un mouvement d'horlogerie électronique (16) à circuit garde-temps, **caractérisé ce que** les microvalves (27) disposées dans l'élément inférieur (5) et la micropompe (23) sont activées par des signaux électriques fournis par les moyens de commande, qui sont cadencés par une base de temps du circuit garde-temps de manière à sélectionner certaines cavités fermées à remplir ou vider du fluide coloré pour afficher une heure ou une date, lesdites cavités fermées étant configurées en digits formés chacun de segments d'affichage.

7. Dispositif d'affichage (2) selon l'une des revendications précédentes, **caractérisé en ce que** la première plaque est constituée d'une plaque supérieure (4) fixée sur une plaque intermédiaire (6), qui est disposée sur l'élément inférieur (5), chaque cavité fermée (29) étant formée au moins en partie dans la plaque intermédiaire.

8. Dispositif d'affichage (2) selon la revendication 7, **caractérisé en ce que** chaque cavité (29) formée dans la plaque intermédiaire (6) depuis une surface inférieure de la plaque supérieure est fermée par la surface supérieure de l'élément inférieur.

9. Dispositif d'affichage (2) selon la revendication 7, **caractérisé en ce qu'**il comprend un ensemble de pierres transparentes ou semi transparentes (30), qui sont maintenues dans la matière de la plaque intermédiaire (6) pour combiner l'information affichée avec la réfraction de lumière au travers des pierres visibles et/ou la réflexion sur ou dans lesdites pierres, et **en ce que** chaque cavité fermée (29) est formée dans la plaque intermédiaire entre une facette supérieure de chaque pierre et une surface inférieure de la plaque supérieure (4), le canal (28) d'alimentation en fluide coloré de chaque cavité traversant la plaque intermédiaire et passant par l'élément inférieur pour être relié par l'intermédiaire des moyens d'alimentation (23, 27) au réservoir (24) de fluide coloré.

10. Dispositif d'affichage (2) selon la revendication 9, **caractérisé en ce que** les pierres sont des pierres précieuses (30) qui sont agencées dans la matière de la plaque intermédiaire (6) sous forme de digits en regard des cavités (29) configurées en digits, et **en ce que** la forme et la dimension de chaque segment constitué par chaque cavité fermée sont choisies de manière à apercevoir entièrement ou partiellement au moins deux pierres par cavité non remplie du fluide coloré.

11. Dispositif d'affichage (2) selon l'une des revendications 1 à 6, **caractérisé en ce que** la première plaque est constituée d'un support transparent ou semi transparent (3) fixé sur une plaque intermédiaire (6) qui est disposée sur l'élément inférieur (5), chaque cavité fermée (29) étant formée au moins en partie dans la plaque intermédiaire, et **en ce que** le support forme une grille maintenant plusieurs pierres précieuses transparentes ou semi transparentes (30) proches l'une de l'autre pour couvrir la portion du support directement visible dans le champ de vision du dispositif d'affichage.

12. Montre (1) comprenant dans une boîte (11) fermée par un verre (17) un dispositif d'affichage (2) selon l'une des revendications précédentes.

13. Montre (1) selon la revendication 12, **caractérisée en ce qu'**une partie du dispositif d'affichage (2) constitue le cadran de la montre, et **en ce que** des aiguilles d'indication de l'heure (13, 14, 15), qui sont entraînées par un dispositif d'entraînement d'un mouvement horloger (16), traversent l'élément inférieur (5) et la première plaque transparente ou semi transparente (3, 4, 6) pour l'indication de l'heure.

14. Montre (1) selon l'une des revendications 12 et 13, **caractérisée en ce que** les moyens d'alimentation en fluide coloré du dispositif d'affichage (2) comprennent au moins une micropompe (23) reliée à un réservoir (24) de fluide coloré (24') et plusieurs microvalves (27) reliées par un conduit de sortie commun (25) à la micropompe, chaque microvalve étant reliée à une cavité respective (29) par un canal (28) à travers l'élément inférieur (5), et **en ce que** la micropompe et les microvalves sont commandées par des signaux électriques fournis par des moyens de commande cadencés par une base de temps du mouvement d'horlogerie (16) afin que certaines cavités sélectionnées soient remplies ou vidées du fluide coloré pour un affichage d'une heure ou d'une date.
